# EUROPEAN PATENT APPLICATION

(11) **EP 4 852 255 A1**
(43) Date of publication of application: **09.12.2026**
(21) Application number: 25751363.0
(22) Date of filing: 24.01.2025
(51) Int. Cl.: H02H 9/02, H02H 7/00, H02J 15/00

(54) **ENERGY STORAGE VALVE AND CONTROL METHOD AND CONTROL DEVICE THEREFOR, AND ENERGY STORAGE DEVICE**

(30) Priority: 08.02.2024 CN 202410178024
(71) Applicant: Contemporary Amperex Future Energy Research Institute (Shanghai) Limited, Shanghai 200241 (CN); Contemporary Amperex Technology Co., Limited, Ningde, Fujian 352100 (CN)
(72) Inventor: LIU, Qiang, Shanghai 200241 (CN); TU, Qing, Shanghai 200241 (CN)
(74) Representative: Gong, Jinping
(86) International application number: PCT/CN2025/074891
(87) International publication number: WO 2025/167761

(57) **Abstract**

The present application relates to an energy storage valve and a control method and control device therefor, and an energy storage device. The energy storage valve may comprise at least two energy storage modules which can be connected to a main line of the energy storage valve, a current limiting circuit, and an electrical parameter measurement circuit which can be used for measuring electrical parameters in the circuit, wherein the current limiting circuit and the electrical parameter measurement circuit are both connected to a grounding point on the main line of the energy storage valve, the grounding point is connected to the ground, and the electrical parameter measurement circuit is arranged between the grounding point and the ground. According to embodiments of the present application, whether a ground short circuit has occurred inside the energy storage valve can be detected in a timely manner, so that short-circuit protection can be carried out in a timely manner when the ground short circuit is present inside the energy storage valve, and the extent of damage to the energy storage valve caused by a fault current can be reduced as much as possible, thereby protecting the energy storage valve.

## Description

### CROSS-REFERENCE TO RELATED APPLICATIONS

This application refers to China Patent Application No. 202410178024X, filed on February 08, 2024 and entitled "ENERGY STORAGE VALVE, CONTROL METHOD FOR ENERGY STORAGE VALVE, CONTROL APPARATUS FOR ENERGY STORAGE VALVE, AND ENERGY STORAGE APPARATUS", which is incorporated herein by reference in its entirety.

### TECHNICAL FIELD

This application relates to the field of energy storage technologies, and in particular, to an energy storage valve, a control method for energy storage valve, a control apparatus for energy storage valve, and an energy storage apparatus.

### BACKGROUND

With the development of energy storage technology, direct-connected energy storage valves have become one of the mainstream technical directions in energy storage technology.

In the related art, a direct-connected energy storage valve may include a plurality of cascaded energy storage modules, and the energy storage modules are large in size. The energy storage valve has a large number of grounding-related pipelines and/or a large number of insulators, resulting in a high risk of insulation failure to ground within the energy storage valve.

However, protection methods against short circuit to ground in the related art are not applicable to short circuit to ground within the energy storage valve.

### SUMMARY

In view of the foregoing problems, this application provides an energy storage valve, a control method for energy storage valve, a control apparatus for energy storage valve, and an energy storage apparatus, which can resolve the problem that protection methods against short circuit to ground in the related art are not applicable to short circuit to ground within the energy storage valve.

According to a first aspect, this application provides an energy storage valve. The energy storage valve includes at least two energy storage modules configured to be connected in series in a main circuit of the energy storage valve, a current-limiting circuit, and an electrical parameter detection circuit configured to detect electrical parameters in a circuit;
where the current-limiting circuit and the electrical parameter detection circuit are both connected to a grounding point on the main circuit of the energy storage valve, the grounding point is connected to ground, and the electrical parameter detection circuit is disposed between the grounding point and the ground.

In the technical solution of the embodiments of this application, the provision of the current-limiting circuit can limit the magnitude of the fault current and/or the current rising rate during short circuit to ground within the energy storage valve, and thus mitigate damage caused by the fault current to the energy storage valve as much as possible, thereby helping to protect the energy storage valve. In addition, the electrical parameter detection circuit being disposed between the grounding point and the ground can detect the electrical parameters on the grounding branch between the grounding point and the ground for timely monitoring of whether short circuit to ground occurs within the energy storage valve, so that short-circuit protection can be promptly performed when short circuit to ground within the energy storage valve is detected, thereby further protecting the energy storage valve.

In some embodiments, a first portion of energy storage modules among the at least two energy storage modules is located on one side of the grounding point, and a second portion of energy storage modules among the at least two energy storage modules is located on the other side of the grounding point.

In the technical solution of the embodiments of this application, the energy storage valve uses a midpoint grounding method on the main circuit of the energy storage valve, so that when short circuit to ground occurs within the energy storage valve, the fault current can be grounded through the grounding branch and the ground short-circuit fault can be promptly detected through the electrical parameter detection circuit, which enables timely short-circuit protection, thereby preventing fault propagation as much as possible.

In some embodiments, a number difference between the first portion of energy storage modules and the second portion of energy storage modules is less than a preset number, so that the number difference between the energy storage modules that can be in an energized state on two sides of the grounding point can be less than a preset difference, helping to further improve the stability of the busbar voltage of the energy storage valve.

In some embodiments, the current-limiting circuit includes a first current-limiting unit disposed between the first portion of energy storage modules and the second portion of energy storage modules, and/or a second current-limiting unit disposed between the grounding point and the ground.

In some embodiments, the first current-limiting unit includes a first reactor and a second reactor;
where the first reactor is disposed between the first portion of energy storage modules and the grounding point; and
the second reactor is disposed between the second portion of energy storage modules and the grounding point.

In the technical solution of the embodiments of this application, the provision of the reactors on the upper and lower arms of the main circuit of the energy storage valve close to the grounding point respectively can limit the rising rate of the fault current regardless of whether short circuit to ground occurs on the upper arm or the lower arm within the energy storage valve close to the grounding point, which provides protection time, thereby improving the reliability of the energy storage valve.

In some embodiments, the second current-limiting unit includes a third reactor and/or a first resistor.

In the technical solution of the embodiments of this application, the provision of the third reactor and/or the first resistor on the grounding branch between the grounding point and the ground can limit the rising rate and/or magnitude of the fault current during short circuit to ground within the energy storage valve, thereby improving the reliability of the energy storage valve.

In some embodiments, the at least two energy storage modules are all located on one side of the grounding point, so that the grounding point can be grounded through the current-limiting circuit and the electrical parameter detection circuit, which achieves a monopolar energy storage valve with low circuit power, helping to reduce the operating cost of the energy storage valve.

In some embodiments, the current-limiting circuit includes a third current-limiting unit disposed between the grounding point and the ground, which can limit the rising rate of the fault current during short circuit to ground within the energy storage valve, thereby improving the reliability of the energy storage valve.

In some embodiments, the third current-limiting unit includes a fourth reactor.

In some embodiments, the energy storage valve further includes a control device connected to the at least two energy storage modules and the electrical parameter detection circuit;
where the control device is configured to determine whether short circuit to ground occurs within the energy storage valve based on an electrical parameter detected by the electrical parameter detection circuit, so that short-circuit protection can be promptly performed when it is determined that short circuit to ground occurs within the energy storage valve, thereby protecting the normal operation of the energy storage valve.

According to a second aspect, this application provides a control method for energy storage valve, where the energy storage valve is the energy storage valve according to any one of the first aspect, and the method includes:
obtaining an electrical parameter detected by a first electrical parameter detection circuit in the energy storage valve; and
determining whether short circuit to ground occurs within the energy storage valve based on the electrical parameter.

In some embodiments, the determining whether short circuit to ground occurs within the energy storage valve based on the electrical parameter includes:
if the electrical parameter is greater than or equal to a preset current threshold, determining that short circuit to ground occurs within the energy storage valve.

In some embodiments, the determining whether short circuit to ground occurs within the energy storage valve based on the electrical parameter includes:
determining a current change rate based on the electrical parameter; and
if the current change rate is greater than or equal to a preset change rate threshold, determining that short circuit to ground occurs within the energy storage valve.

In some embodiments, the energy storage valve further includes a second electrical parameter detection circuit connected to the main circuit of the energy storage valve, where the other end of the second electrical parameter detection circuit is connected to a busbar; and the determining whether short circuit to ground occurs within the energy storage valve based on the electrical parameter includes:
determining an electrical parameter difference between an electrical parameter detected by the second electrical parameter detection circuit and the electrical parameter detected by the first electrical parameter detection circuit; and
if the electrical parameter difference is greater than or equal to a preset electrical parameter difference threshold, determining that short circuit to ground occurs within the energy storage valve.

In some embodiments, the method further includes:
if it is determined that short circuit to ground occurs within the energy storage valve, controlling the energy storage valve to switch to a blocked state.

According to a third aspect, this application provides a control apparatus for energy storage valve, where the energy storage valve is the energy storage valve according to any one of the first aspect, and the apparatus includes:
an obtaining module configured to obtain an electrical parameter detected by a first electrical parameter detection circuit in the energy storage valve; and
a determining module configured to determine whether short circuit to ground occurs within the energy storage valve based on the electrical parameter.

According to a fourth aspect, this application provides an energy storage apparatus, where the energy storage apparatus includes the energy storage valve according to any one of the first aspect.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments, and should not be construed as any limitation on this application. In addition, in all the accompanying drawings, the same reference signs represent the same components. In the accompanying drawings:
FIG. 1 is a schematic structural diagram of an energy storage valve according to some embodiments of this application;
FIG. 2 is a schematic structural diagram of an energy storage valve according to some other embodiments of this application;
FIG. 3 is a schematic structural diagram of an energy storage valve according to some other embodiments of this application;
FIG. 4 is a schematic structural diagram of an energy storage valve according to some other embodiments of this application;
FIG. 5 is a schematic structural diagram of an energy storage valve according to some other embodiments of this application;
FIG. 6 is a schematic structural diagram of an energy storage valve according to some other embodiments of this application;
FIG. 7 is a schematic structural diagram of an energy storage valve according to some other embodiments of this application;
FIG. 8 is a schematic structural diagram of an energy storage valve according to some other embodiments of this application;
FIG. 9 is a schematic structural diagram of an energy storage valve according to some other embodiments of this application;
FIG. 10 is a schematic structural diagram of an energy storage valve according to some other embodiments of this application;
FIG. 11 is a schematic structural diagram of an energy storage valve according to some other embodiments of this application;
FIG. 12 is a schematic structural diagram of an energy storage valve according to some other embodiments of this application;
FIG. 13 is a schematic flowchart of a control method for energy storage valve according to some embodiments of this application; and
FIG. 14 is a schematic structural diagram of a control apparatus for energy storage valve according to some embodiments of this application.

### DESCRIPTION OF EMBODIMENTS

The following describes in detail embodiments of technical solutions of this application with reference to the accompanying drawings. The following embodiments are merely used to describe the technical solutions of this application more clearly, and therefore are merely used as examples and do not constitute any limitation on the protection scope of this application.

Unless otherwise defined, all technical and scientific terms used herein shall have the same meanings as commonly understood by persons skilled in the art to which this application relates. The terms used herein are intended to merely describe the specific embodiments rather than to limit this application. The term "include" and any variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means more than two (inclusive), unless otherwise specifically defined.

The energy storage valve, the control method for energy storage valve, the control apparatus for energy storage valve, and the energy storage apparatus involved in the embodiments of this application can be applied to energy storage technology application scenarios of power systems, and certainly can also be applied to other scenarios.

The energy storage valve involved in the embodiments of this application may include but is not limited to a direct-current direct-connected energy storage valve. It should be understood that for ease of understanding, the following embodiments of this application are introduced and described by using a high-voltage direct-current direct-connected energy storage valve as an example.

Generally, a high-voltage direct-current direct-connected energy storage valve can be applied to a monopolar direct-current system, a pseudo-bipolar direct-current system, or a true bipolar direct-current system. Different types of direct-current systems have different protection methods when a ground fault occurs. (1) When a direct-current busbar-to-ground short circuit occurs in a monopolar direct-current system, direct-current undervoltage protection is typically used; (2) When a direct-current busbar-to-ground short circuit occurs in a pseudo-bipolar direct-current system, busbar overvoltage protection or busbar differential voltage protection is typically used; and (3) When a direct-current busbar-to-ground short circuit occurs in a true bipolar direct-current system, busbar differential current protection or direct-current undervoltage protection is typically used. It can be seen that the protection methods against short circuit to ground in the related art are generally designed for short circuit to ground occurring on the busbar side.

Considering that a direct-connected energy storage valve may include a plurality of cascaded energy storage modules and the energy storage modules are large in size, a multi-valve-tower series structure is required. Compared with a flexible direct-current system, the energy storage valve has a large number of grounding-related pipelines and/or a large number of insulators, resulting in a high risk of insulation failure to ground within the energy storage valve. When short circuit to ground occurs in a region close to the grounding position within the energy storage valve, the busbar-to-ground voltage offset is small, which falls within the blind zone of busbar overvoltage protection, busbar undervoltage protection, busbar differential voltage protection, and busbar overcurrent protection in the related art. Protection methods against short circuit to ground in the related art are not applicable to short circuit to ground within the energy storage valve.

To resolve the problem that protection methods against short circuit to ground in the related art are not applicable to short circuit to ground within the energy storage valve, the embodiments of this application propose a solution in which a current-limiting circuit and an electrical parameter detection circuit are provided on the grounding side of the energy storage valve. This can limit the magnitude of the fault current and/or the current rising rate during short circuit to ground within the energy storage valve, and thus mitigate damage caused by the fault current to the energy storage valve as much as possible, thereby helping to protect the energy storage valve. In addition, this can detect electrical parameters on a grounding branch between the grounding point and the ground for timely monitoring of whether short circuit to ground occurs within the energy storage valve, so that short-circuit protection can be promptly performed when short circuit to ground within the energy storage valve is detected, thereby further protecting the energy storage valve.

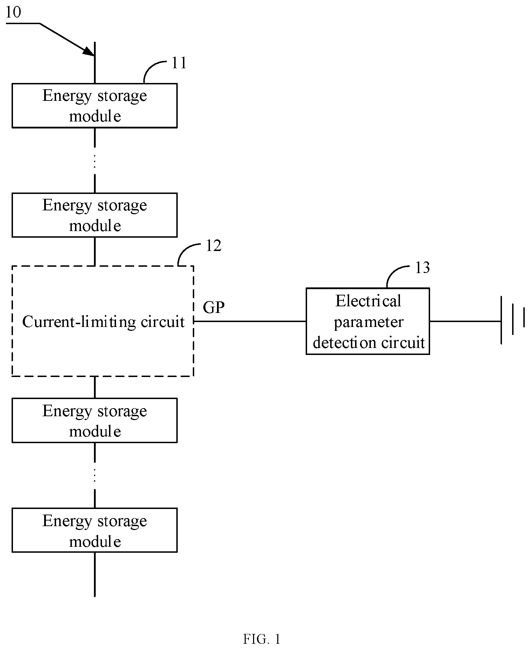

In some embodiments, FIG. 1 is a schematic structural diagram of an energy storage valve according to some embodiments of this application. As shown in FIG. 1, the energy storage valve in the embodiments of this application may include at least two energy storage modules 11 configured to be connected in series in a main circuit 10 of the energy storage valve, a current-limiting circuit 12, and an electrical parameter detection circuit 13 (for ease of distinction, it may be referred to as a first electrical parameter detection circuit) configured to detect electrical parameters in a circuit.

The energy storage module 11 in the embodiments of this application can be used to store or release electric energy. For example, the energy storage module 11 may include but is not limited to an energy storage sub-module (Sub-module, SM).

It should be understood that the energy storage valve in the embodiments of this application can adjust the switching states of each energy storage module 11 during operation. The switching states of the energy storage module 11 may include but are not limited to an energized state (or referred to as an engaged state) or a de-energized state. When the energy storage module 11 is in the engaged state, the energy storage module 11 is connected in series to the main circuit 10 of the energy storage valve; and when the energy storage module 11 is in the de-energized state, the energy storage module 11 is bypassed.

The current-limiting circuit 12 in the embodiments of this application can be used to limit the magnitude and/or rising rate of the fault current during short circuit to ground within the energy storage valve, and thus mitigate the damage caused by the fault current to the energy storage valve as much as possible, thereby helping to protect the energy storage valve.

The electrical parameter in the embodiments of this application may include but is not limited to current and/or voltage. For example, the electrical parameter detection circuit 13 may include but is not limited to an electrical parameter detection sensor or an electrical parameter detection module, where the electrical parameter detection sensor may include but is not limited to an optical current transformer or a Hall sensor.

The current-limiting circuit 12 and the electrical parameter detection circuit 13 in the embodiments of this application are both connected to a grounding point GP on the main circuit 10 of the energy storage valve, and the grounding point GP is connected to ground. It should be noted that the connection between any two circuits or any two positions involved in the embodiments of this application may include direct connection or indirect connection.

The electrical parameter detection circuit 13 in the embodiments of this application may be disposed between the grounding point GP and the ground to detect electrical parameters on a grounding branch between the grounding point GP and the ground, so as to promptly monitor whether short circuit to ground occurs within the energy storage valve. For example, the electrical parameter detection circuit 13 may be directly connected to the grounding point GP, or may be connected to the grounding point GP through the electrical parameter detection circuit 13.

For example, the energy storage valve in the embodiments of this application may use a midpoint grounding method or an end-point grounding method.

In a possible implementation, as shown in FIG. 1, when the energy storage valve uses the midpoint grounding method, the grounding point GP in the embodiments of this application may be located between any two energy storage modules 11 on the main circuit 10 of the energy storage valve. It should be understood that two ends of the main circuit 10 of the energy storage valve may be connected to a positive busbar and a negative busbar respectively. For example, two ends of the main circuit 10 of the energy storage valve may be connected to the positive and negative busbars through corresponding reactors respectively, or may be connected to the positive and negative busbars in other manners.

For example, a first portion of energy storage modules among the at least two energy storage modules 11 on the main circuit 10 of the energy storage valve is located on one side of the grounding point GP, and a second portion of energy storage modules among the at least two energy storage modules 11 is located on the other side of the grounding point GP.

In the embodiments of this application, the energy storage valve uses the midpoint grounding method on the main circuit 10 of the energy storage valve, so that when short circuit to ground occurs within the energy storage valve, the fault current can be grounded through the grounding branch and the ground short-circuit fault can be promptly detected through the electrical parameter detection circuit, which enables timely short-circuit protection, thereby preventing fault propagation as much as possible.

Further, a number difference between the first portion of energy storage modules and the second portion of energy storage modules is less than a preset number, so that the number difference between the energy storage modules that can be in an energized state on two sides of the grounding point GP can be less than a preset difference, helping to further improve the stability of the busbar voltage of the energy storage valve.

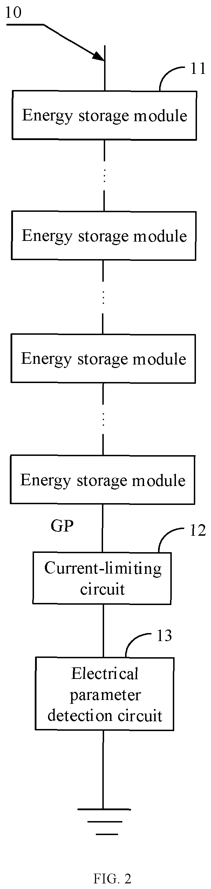

In another possible implementation, FIG. 2 is a schematic structural diagram of an energy storage valve according to some other embodiments of this application. As shown in FIG. 2, when the energy storage valve uses the end-point grounding method, the grounding point GP in the embodiments of this application may be located at the end of the main circuit 10 of the energy storage valve, where the head end of the main circuit 10 of the energy storage valve may be connected to a monopolar busbar. For example, the head end of the main circuit 10 of the energy storage valve may be connected to the monopolar busbar through a corresponding reactor, or may be connected to the monopolar busbar in other manners.

For example, the at least two energy storage modules 11 in the embodiments of this application are all located on one side of the grounding point GP, so that the grounding point GP can be grounded through the current-limiting circuit 12 and the electrical parameter detection circuit 13, which achieves a monopolar energy storage valve with low circuit power, helping to reduce the operating cost of the energy storage valve.

In conclusion, the energy storage valve in the embodiments of this application may include the at least two energy storage modules configured to be connected to the main circuit of the energy storage valve, the current-limiting circuit, and the electrical parameter detection circuit configured to detect electrical parameters in the circuit. The current-limiting circuit and the electrical parameter detection circuit are both connected to the grounding point on the main circuit of the energy storage valve, the grounding point is connected to the ground, and the electrical parameter detection circuit is disposed between the grounding point and the ground. It can be seen that in the embodiments of this application, the provision of the current-limiting circuit can limit the magnitude of the fault current and/or the current rising rate during short circuit to ground within the energy storage valve, and thus mitigate the damage caused by the fault current to the energy storage valve as much as possible, thereby helping to protect the energy storage valve. In addition, the electrical parameter detection circuit being disposed between the grounding point and the ground can detect the electrical parameters on the grounding branch between the grounding point and the ground for timely monitoring of whether short circuit to ground occurs within the energy storage valve, so that short-circuit protection can be promptly performed when short circuit to ground within the energy storage valve is detected, thereby further protecting the energy storage valve.

In some embodiments, based on the foregoing embodiments, the relevant content of the current-limiting circuit 12 in the embodiments of this application is introduced and described using examples. The current-limiting circuit 12 in the embodiments of this application may include a first current-limiting unit disposed between the first portion of energy storage modules and the second portion of energy storage modules, and/or a second current-limiting unit disposed between the grounding point GP and the ground. It should be understood that the first current-limiting unit in the embodiments of this application may be connected in series to the main circuit 10 of the energy storage valve, and the grounding point GP may be located in the first current-limiting unit.

The first current-limiting unit in the embodiments of this application can be used to limit the rising rate of the fault current during short circuit to ground within the energy storage valve; and the second current-limiting unit can be used to limit the magnitude of the fault current during short circuit to ground within the energy storage valve, and/or further limit the rising rate of the fault current during short circuit to ground within the energy storage valve.

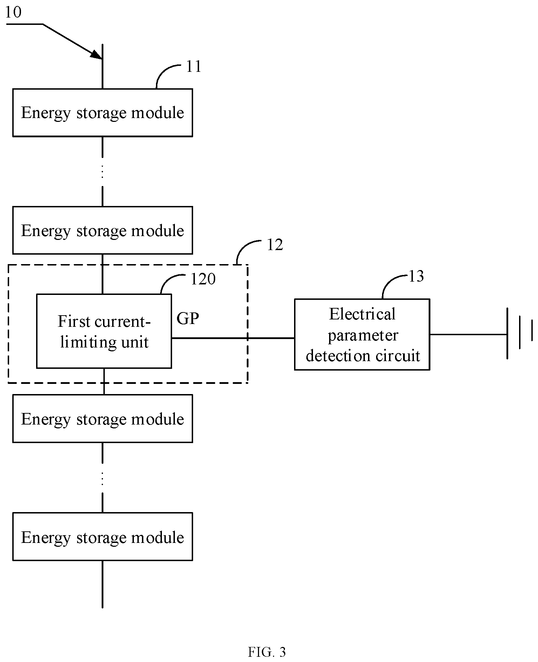

In a possible implementation, FIG. 3 is a schematic structural diagram of an energy storage valve according to some other embodiments of this application. As shown in FIG. 3, the current-limiting circuit 12 in the embodiments of this application may include a first current-limiting unit 120 disposed between the first portion of energy storage modules and the second portion of energy storage modules, where the grounding point GP (that is, the grounding point GP in the first current-limiting unit 120) on the main circuit 10 of the energy storage valve can be connected to the ground through the electrical parameter detection circuit 13, so as to collect the electrical parameters on the grounding branch between the grounding point GP and the ground, thereby promptly monitoring whether short circuit to ground occurs within the energy storage valve.

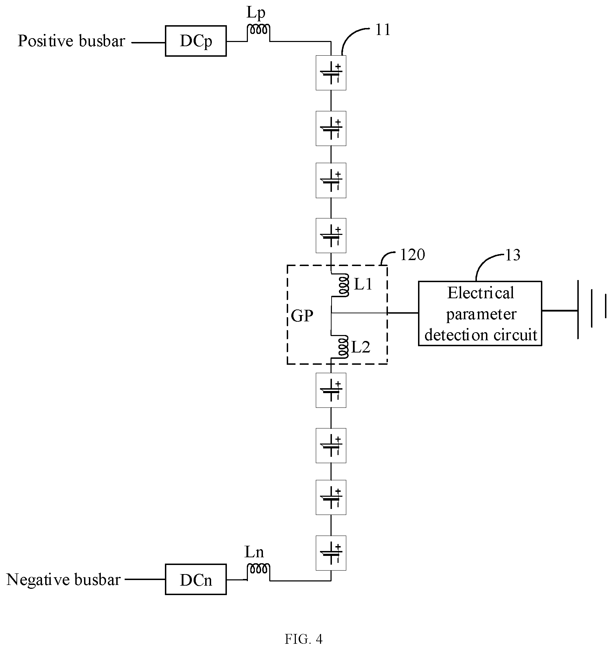

For example, FIG. 4 is a schematic structural diagram of an energy storage valve according to some other embodiments of this application. As shown in FIG. 4, the first current-limiting unit 120 in the embodiments of this application may include but is not limited to a first reactor L1 and a second reactor L2. The first reactor L1 can be disposed between the first portion of energy storage modules and the grounding point GP; and the second reactor L2 can be disposed between the second portion of energy storage modules and the grounding point GP.

It should be understood that in the embodiments of this application, an example is used, in which one end of the main circuit 10 of the energy storage valve may be connected to the positive busbar through a positive reactor Lp and a positive electrical parameter detection circuit DCp, and the other end of the main circuit 10 of the energy storage valve may be connected to the negative busbar through a negative reactor Ln and a negative electrical parameter detection circuit DCn. Certainly, two ends of the main circuit 10 of the energy storage valve may alternatively be connected to the positive and negative busbars in other manners.

It should be noted that the first current-limiting unit 120 in the embodiments of this application may further include a larger number of reactors or other devices with the function of limiting the current rising rate.

In the embodiments of this application, the provision of the reactors on the upper and lower arms of the main circuit 10 of the energy storage valve close to the grounding point GP respectively can limit the rising rate of the fault current regardless of whether short circuit to ground occurs on the upper arm or the lower arm within the energy storage valve close to the grounding point GP, which provides protection time, thereby improving the reliability of the energy storage valve.

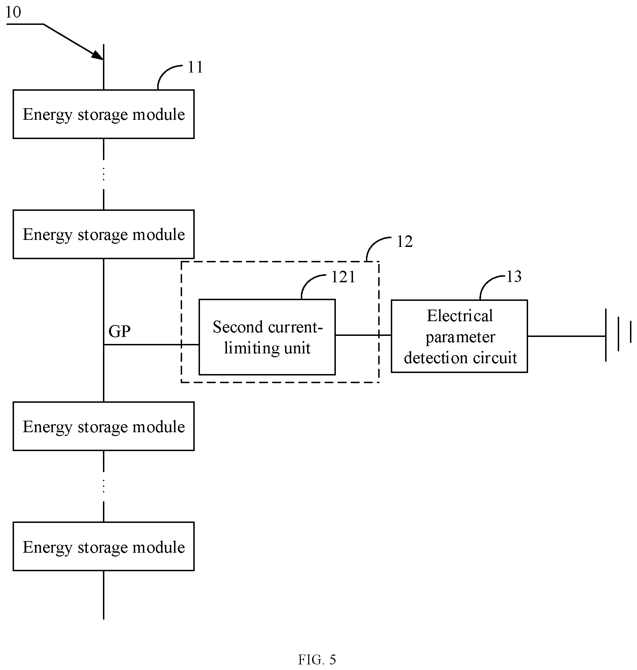

In another possible implementation, FIG. 5 is a schematic structural diagram of an energy storage valve according to some other embodiments of this application. As shown in FIG. 5, the current-limiting circuit 12 in the embodiments of this application may include a second current-limiting unit 121 disposed between the grounding point GP and the ground. An electrical parameter detection circuit 13 is further disposed between the grounding point GP and the ground, so as to collect the electrical parameters on the grounding branch between the grounding point GP and the ground, thereby promptly monitoring whether short circuit to ground occurs within the energy storage valve. It should be understood that the positions of the second current-limiting unit 121 and the electrical parameter detection circuit 13 on the grounding branch can be interchanged.

In the embodiments of this application, the provision of the second current-limiting unit on the grounding branch between the grounding point and the ground can prevent positive and negative currents during normal operation of the energy storage valve from flowing through the second current-limiting unit, thereby reducing the loss during normal operation of the energy storage valve.

The second current-limiting unit 121 in the embodiments of this application may include but is not limited to a third reactor and/or a first resistor. The third reactor can be used to limit the rising rate of the fault current during short circuit to ground within the energy storage valve, and the first resistor can be used to limit the magnitude of the fault current during short circuit to ground within the energy storage valve.

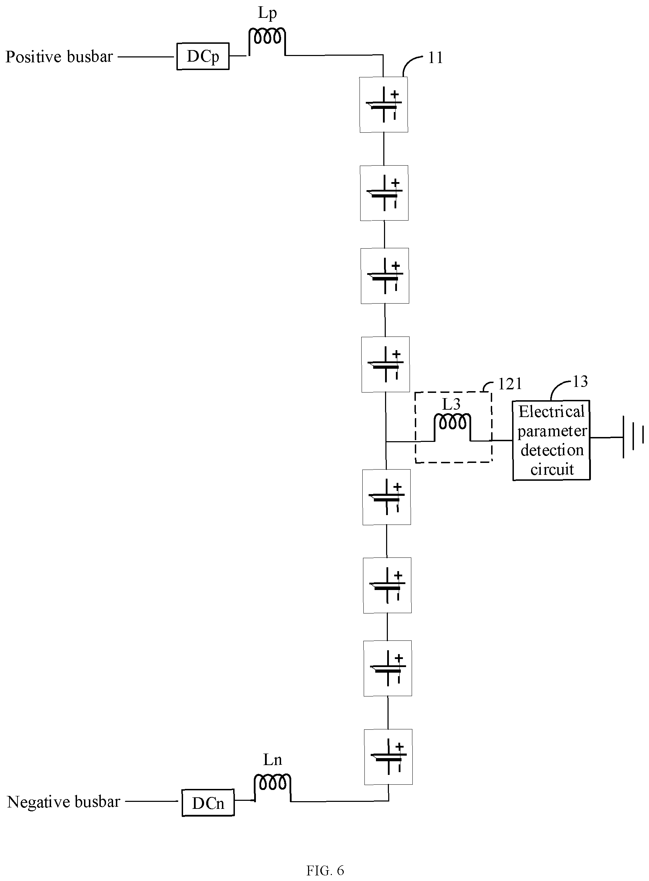

For example, FIG. 6 is a schematic structural diagram of an energy storage valve according to some other embodiments of this application. As shown in FIG. 6, the second current-limiting unit 121 in the embodiments of this application may include but is not limited to a third reactor L3. In the embodiments of this application, the provision of the third reactor on the grounding branch between the grounding point and the ground can limit the rising rate of the fault current during short circuit to ground within the energy storage valve while reducing the reactors, thereby reducing the production cost of the energy storage valve, and reducing the loss during normal operation of the energy storage valve.

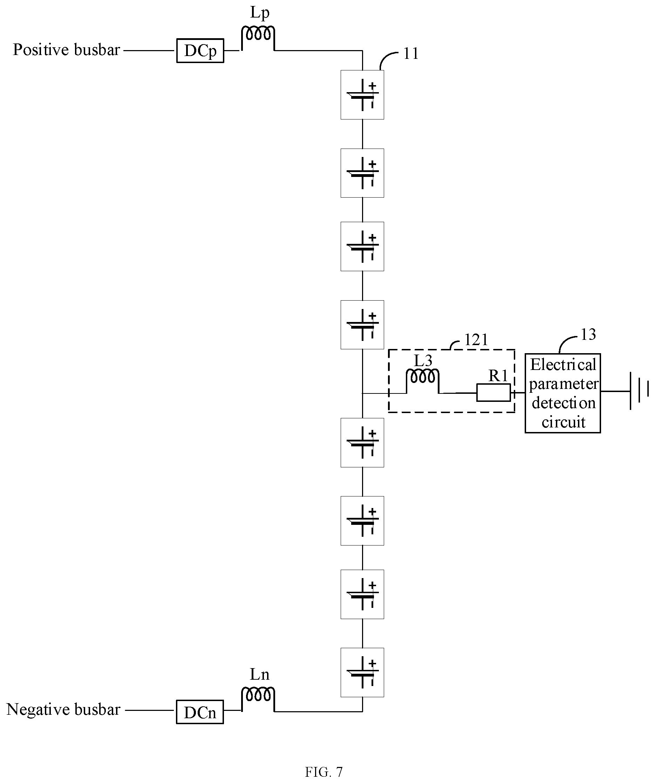

For another example, FIG. 7 is a schematic structural diagram of an energy storage valve according to some other embodiments of this application. As shown in FIG. 7, the second current-limiting unit 121 in the embodiments of this application may include a third reactor L3 and a first resistor R1. It should be understood that the positions of the third reactor L3 and the first resistor R1 on the grounding branch can be interchanged.

In the embodiments of this application, the provision of the third reactor and the first resistor on the grounding branch between the grounding point and the ground can limit the rising rate and magnitude of the fault current during short circuit to ground within the energy storage valve while reducing the reactors, thereby reducing the production cost of the energy storage valve.

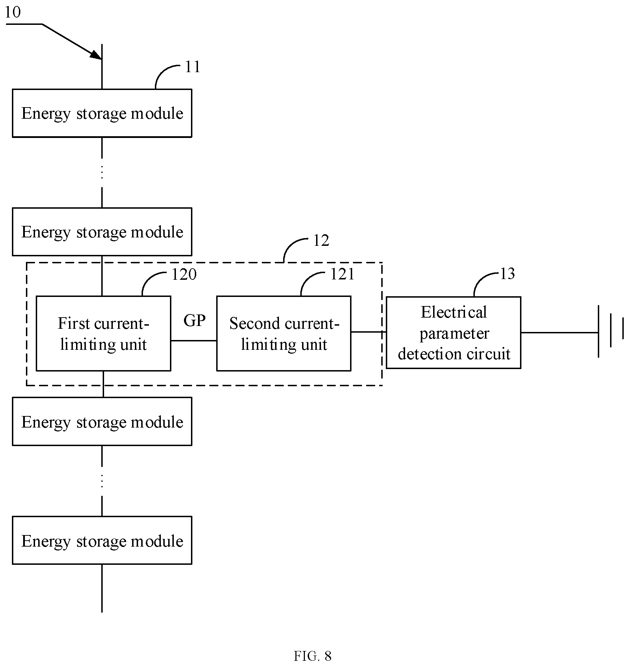

In another possible implementation, FIG. 8 is a schematic structural diagram of an energy storage valve according to some other embodiments of this application. As shown in FIG. 8, the current-limiting circuit 12 in the embodiments of this application may include a first current-limiting unit 120 disposed between the first portion of energy storage modules and the second portion of energy storage modules, and a second current-limiting unit 121 disposed between the grounding point GP and the ground. An electrical parameter detection circuit 13 is further disposed between the grounding point GP and the ground, so as to collect the electrical parameters on the grounding branch between the grounding point GP and the ground, thereby promptly monitoring whether short circuit to ground occurs within the energy storage valve. It should be understood that the positions of the second current-limiting unit 121 and the electrical parameter detection circuit 13 on the grounding branch can be interchanged.

It should be noted that for the structures of the first current-limiting unit 120 and the second current-limiting unit 121, reference may be made to the relevant content in the foregoing embodiments. Details are not repeated herein.

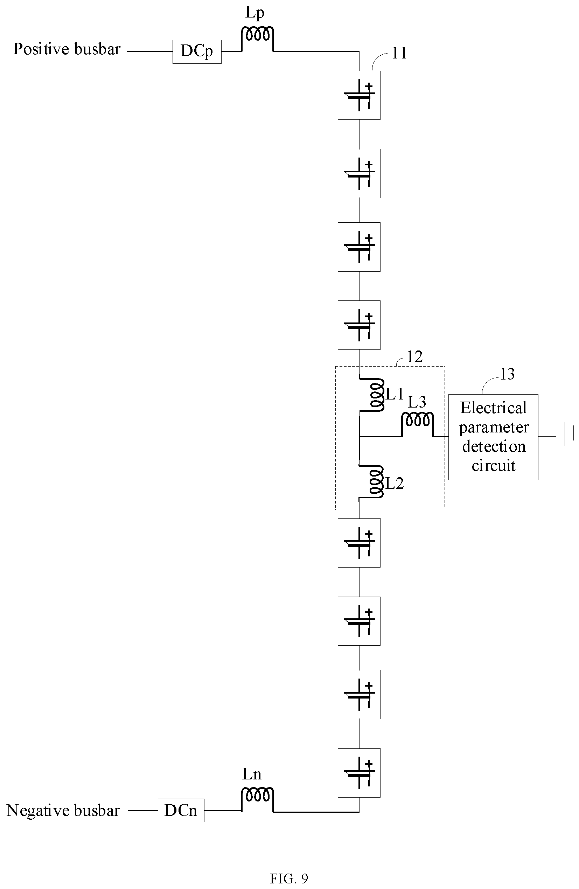

For example, FIG. 9 is a schematic structural diagram of an energy storage valve according to some other embodiments of this application. As shown in FIG. 9, the first current-limiting unit of the current-limiting circuit 12 in the embodiments of this application may include but is not limited to a first reactor L1 and a second reactor L2, and the second current-limiting unit 121 may include but is not limited to a third reactor L3.

In the embodiments of this application, the provision of the reactors on the upper and lower arms of the main circuit of the energy storage valve close to the grounding point respectively and the provision of the third reactor on the grounding branch between the grounding point and the ground can further limit the rising rate of the fault current during short circuit to ground within the energy storage valve, thereby further improving the reliability of the energy storage valve.

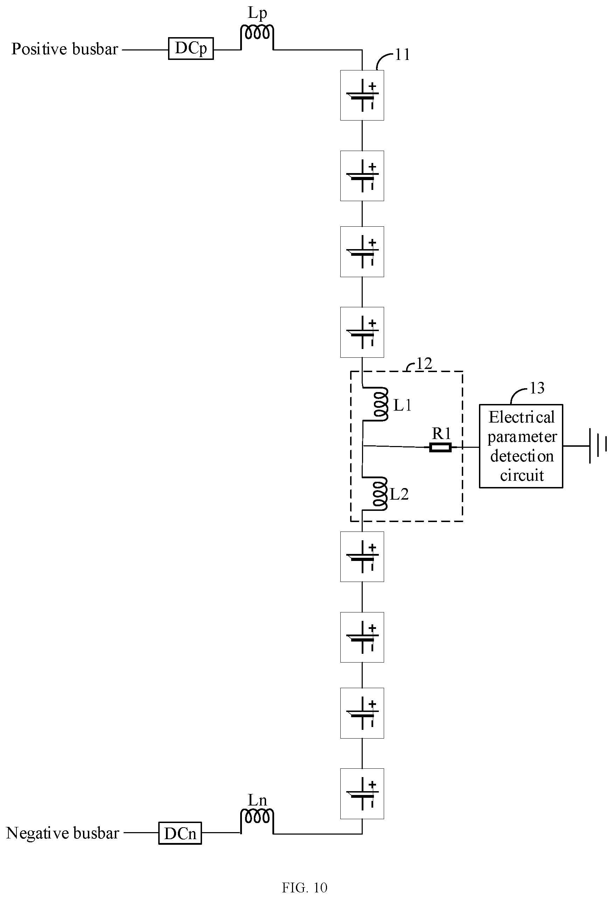

For example, FIG. 10 is a schematic structural diagram of an energy storage valve according to some other embodiments of this application. As shown in FIG. 10, the first current-limiting unit of the current-limiting circuit 12 in the embodiments of this application may include but is not limited to a first reactor L1 and a second reactor L2, and the second current-limiting unit may include but is not limited to a first resistor R1.

In the embodiments of this application, the provision of the reactors on the upper and lower arms of the main circuit of the energy storage valve close to the grounding point respectively and the provision of the first resistor on the grounding branch between the grounding point and the ground can limit not only the rising rate of the fault current during short circuit to ground within the energy storage valve, but also the magnitude of the fault current during short circuit to ground within the energy storage valve, thereby further improving the reliability of the energy storage valve.

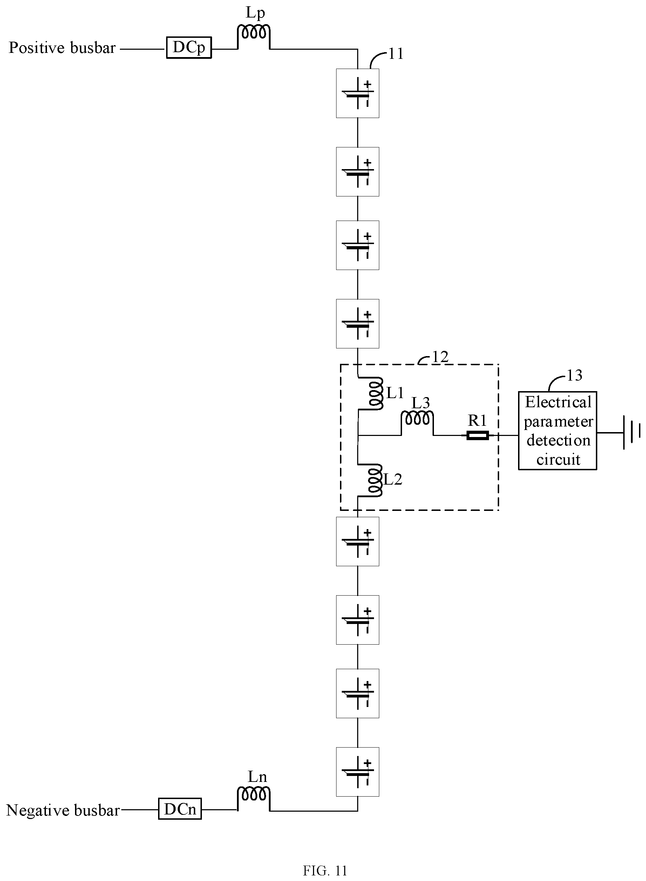

For example, FIG. 11 is a schematic structural diagram of an energy storage valve according to some other embodiments of this application. As shown in FIG. 11, the first current-limiting unit of the current-limiting circuit 12 in the embodiments of this application may include but is not limited to a first reactor L1 and a second reactor L2, and the second current-limiting unit may include but is not limited to a third reactor L3 and a first resistor R1. It should be understood that the positions of the third reactor L3, the first resistor R1, and the electrical parameter detection circuit 13 on the grounding branch can be interchanged.

In the embodiments of this application, the provision of the reactors on the upper and lower arms of the main circuit of the energy storage valve close to the grounding point respectively and the provision of the third reactor and the first resistor on the grounding branch between the grounding point and the ground can limit not only the rising rate of the fault current during short circuit to ground within the energy storage valve, but also the magnitude of the fault current during short circuit to ground within the energy storage valve, thereby further improving the reliability of the energy storage valve.

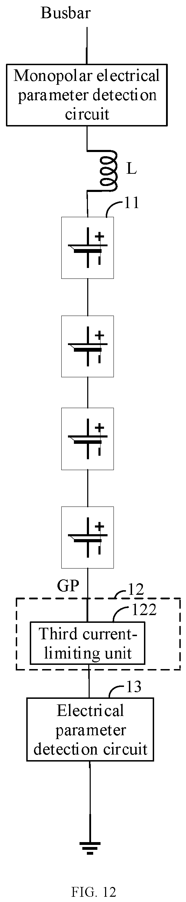

In some embodiments, based on the foregoing embodiments, the relevant content of the current-limiting circuit 12 in the embodiments of this application is further introduced and described using examples. FIG. 12 is a schematic structural diagram of an energy storage valve according to some other embodiments of this application. As shown in FIG. 12, the current-limiting circuit 12 in the embodiments of this application may include a third current-limiting unit 122 disposed between the grounding point GP and the ground. An electrical parameter detection circuit 13 (for ease of distinction, it may be referred to as a second electrical parameter detection circuit) is further disposed between the grounding point GP and the ground, so as to collect the electrical parameters on the grounding branch between the grounding point GP and the ground, thereby promptly monitoring whether short circuit to ground occurs within the energy storage valve.

It should be understood that in the embodiments of this application, an example is used, in which the head end of the main circuit 10 of the energy storage valve may be connected to a monopolar busbar through a reactor L and a monopolar electrical parameter detection circuit. Certainly, the head end of the main circuit 10 of the energy storage valve may alternatively be connected to the monopolar busbar in other manners. The positions of the third current-limiting unit 122 and the electrical parameter detection circuit 13 on the grounding branch in the embodiments of this application can be interchanged.

The third current-limiting unit 122 in the embodiments of this application can be used to limit the rising rate of the fault current during short circuit to ground within the energy storage valve. For example, the third current-limiting unit 122 in the embodiments of this application may include but is not limited to a fourth reactor.

In the embodiments of this application, the provision of the third current-limiting unit on the grounding branch between the grounding point and the ground can limit the rising rate of the fault current during short circuit to ground within the energy storage valve, thereby improving the reliability of the energy storage valve.

In some embodiments, based on the foregoing embodiments, the energy storage valve in the embodiments of this application may further include a control device (not shown in the figure) connected to the at least two energy storage modules 11 and the electrical parameter detection circuit 13 (for ease of distinction, it may be referred to as a first electrical parameter detection circuit), so as to obtain the detected electrical parameters from the electrical parameter detection circuit 13 and control the switching states of the energy storage modules 11.

The control device in the embodiments of this application can determine whether short circuit to ground occurs within the energy storage valve based on an electrical parameter detected by the electrical parameter detection circuit 13, so that short-circuit protection can be promptly performed when it is determined that short circuit to ground occurs within the energy storage valve, thereby protecting the normal operation of the energy storage valve. The short-circuit protection in the embodiments of this application may include but is not limited to controlling the energy storage valve to switch to a blocked state.

Optionally, the control device can determine the current magnitude or current rising rate on the grounding branch between the grounding point and the ground based on the electrical parameter detected by the first electrical parameter detection circuit, and then determine whether short circuit to ground occurs within the energy storage valve based on the current magnitude or current rising rate on the grounding branch.

The following embodiments of this application sequentially introduce and describe the relevant content of how to determine whether short circuit to ground occurs within the energy storage valve when the energy storage valve uses the midpoint grounding method and when the energy storage valve uses the end-point grounding method using examples.

In some embodiments, when the energy storage valve uses the midpoint grounding method, the control device can determine the current magnitude or current rising rate on the grounding branch between the grounding point and the ground based on the electrical parameter detected by the first electrical parameter detection circuit, and then determine whether short circuit to ground occurs within the energy storage valve based on the current magnitude or current rising rate on the grounding branch.

In a possible implementation, when the electrical parameter detected by the first electrical parameter detection circuit includes current, the control device can determine whether short circuit to ground occurs within the energy storage valve by comparing the electrical parameter detected by the first electrical parameter detection circuit with a preset current threshold.

For example, the preset current threshold may include but is not limited to the product of a first preset safety factor and a preset rated current; where the first preset safety factor may include but is not limited to any value within 0-1, and the preset rated current may include but is not limited to the current on the grounding branch when any energy storage module connected to the main circuit of the energy storage valve experiences short circuit to ground.

Further, if the electrical parameter detected by the first electrical parameter detection circuit is greater than or equal to the preset current threshold, the control device can consider that at least one energy storage module connected to the main circuit of the energy storage valve experiences short circuit to ground, and thus determine that short circuit to ground occurs within the energy storage valve.

It should be understood that if the electrical parameter detected by the first electrical parameter detection circuit is less than the preset current threshold, the control device can consider that none of the energy storage modules connected to the main circuit of the energy storage valve experiences short circuit to ground, and thus determine that no short circuit to ground occurs within the energy storage valve.

It should be noted that when the electrical parameter detected by the first electrical parameter detection circuit includes a non-current parameter, the control device can determine the current on the grounding branch between the grounding point and the ground based on the electrical parameter detected by the first electrical parameter detection circuit, and then determine whether short circuit to ground occurs within the energy storage valve based on the current magnitude on the grounding branch between the grounding point and the ground.

It can be seen that in the embodiments of this application, since the electrical parameter detected by the first electrical parameter detection circuit can accurately indicate the electrical parameter on the grounding branch between the grounding point and the ground when short circuit to ground occurs within the energy storage valve, comparing the electrical parameter detected by the first electrical parameter detection circuit with the preset current threshold can accurately determine whether short circuit to ground occurs within the energy storage valve.

In another possible implementation, the control device can determine a current change rate based on the electrical parameter detected by the first electrical parameter detection circuit, and determine whether short circuit to ground occurs within the energy storage valve by comparing the current change rate with a preset change rate threshold.

For example, the preset change rate threshold may include but is not limited to the product of a second preset safety factor and a preset rated current change rate.

For example, the second preset safety factor in the embodiments of this application may include but is not limited to any value within 0-1, and the preset rated current change rate may include but is not limited to the current change rate on the grounding branch when any energy storage module on the main circuit of the energy storage valve close to the grounding point experiences short circuit to ground.

For example, the preset rated current change rate in the following embodiments of this application may include but is not limited to the ratio of the voltage of any energy storage module on the main circuit of the energy storage valve close to the grounding point to the short-circuit loop inductance.

It should be noted that the short-circuit loop inductance is related to the current-limiting circuit in the energy storage valve. For example, when the current-limiting circuit of the energy storage valve uses the structure shown in FIG. 4 or FIG. 10, the short-circuit loop inductance may be the value of the first reactor L1 or the second reactor L2. For another example, when the current-limiting circuit of the energy storage valve uses the structure shown in FIG. 6 or FIG. 7, the short-circuit loop inductance may be the value of the third reactor L3. For another example, when the current-limiting circuit of the energy storage valve uses the structure shown in FIG. 9 or FIG. 11, the short-circuit loop inductance may be the sum of the values of the first reactor L1 and the third reactor L3 or the sum of the values of the second reactor L2 and the third reactor L3.

For example, if the current change rate is greater than or equal to the preset change rate threshold, the control device can consider that at least one energy storage module connected to the main circuit of the energy storage valve experiences short circuit to ground, and thus determine that short circuit to ground occurs within the energy storage valve.

It should be understood that if the current change rate is less than the preset change rate threshold, the control device can consider that none of the energy storage modules connected to the main circuit of the energy storage valve experiences short circuit to ground, and thus determine that no short circuit to ground occurs within the energy storage valve.

It can be seen that in the embodiments of this application, since the electrical parameter detected by the first electrical parameter detection circuit can accurately indicate the electrical parameter on the grounding branch between the grounding point and the ground when short circuit to ground occurs within the energy storage valve, the current change rate determined based on the electrical parameter can accurately indicate the current change rate on the grounding branch between the grounding point and the ground, and comparing the current change rate with the preset change rate threshold can accurately determine whether short circuit to ground occurs within the energy storage valve.

In some embodiments, when the energy storage valve uses the end-point grounding method, the control device can determine the current rising rate on the grounding branch between the grounding point and the ground based on the electrical parameter detected by the first electrical parameter detection circuit, and then determine whether short circuit to ground occurs within the energy storage valve based on the current rising rate on the grounding branch.

It should be noted that when the energy storage valve uses the end-point grounding method, for the relevant content of how the control device determines whether short circuit to ground occurs within the energy storage valve based on the current rising rate on the grounding branch, reference may be made to the relevant content of the foregoing case in which the energy storage valve uses the midpoint grounding method. Details are not repeated herein.

In some embodiments, when the energy storage valve uses the end-point grounding method, the control device can determine the current magnitude on the grounding branch between the grounding point and the ground based on the electrical parameter detected by the first electrical parameter detection circuit, and determine the current magnitude between the head end of the main circuit of the energy storage valve and the monopolar busbar based on an electrical parameter detected by the second electrical parameter detection circuit. Further, the control device can determine whether short circuit to ground occurs within the energy storage valve based on the current magnitude on the grounding branch between the grounding point and the ground and the current magnitude between the head end of the main circuit of the energy storage valve and the monopolar busbar. The second electrical parameter detection circuit is connected to the main circuit of the energy storage valve on one end and connected to the busbar on the other end.

In a possible implementation, when the electrical parameter detected by the electrical parameter detection circuit includes current, the control device can determine an electrical parameter difference between the electrical parameter detected by the second electrical parameter detection circuit and the electrical parameter detected by the first electrical parameter detection circuit, and determine whether short circuit to ground occurs within the energy storage valve by comparing the electrical parameter difference with a preset electrical parameter difference threshold.

For example, the preset electrical parameter difference threshold may include but is not limited to the product of a third preset safety factor and a preset rated electrical parameter difference.

For example, the third preset safety factor in the embodiments of this application may include but is not limited to any value within 0-1, and the preset rated electrical parameter difference may include but is not limited to the difference between the electrical parameter detected by the second electrical parameter detection circuit and the electrical parameter detected by the first electrical parameter detection circuit when an energy storage module on the main circuit of the energy storage valve close to the grounding point experiences short circuit to ground.

For example, if the electrical parameter difference is greater than or equal to the preset electrical parameter difference threshold, the control device can consider that at least one energy storage module connected to the main circuit of the energy storage valve experiences short circuit to ground, and thus determine that short circuit to ground occurs within the energy storage valve.

It should be understood that if the electrical parameter difference is less than the preset electrical parameter difference threshold, the control device can consider that none of the energy storage modules connected to the main circuit of the energy storage valve experiences short circuit to ground, and thus determine that no short circuit to ground occurs within the energy storage valve.

It can be seen that in the embodiments of this application, since the electrical parameters detected by the first electrical parameter detection circuit and the second electrical parameter detection circuit can accurately indicate the electrical parameters at the corresponding positions when short circuit to ground occurs within the energy storage valve, comparing the electrical parameter difference between the electrical parameters detected by the first electrical parameter detection circuit and the second electrical parameter detection circuit with the preset electrical parameter difference threshold can accurately determine whether short circuit to ground occurs within the energy storage valve.

Certainly, the control device may alternatively determine whether short circuit to ground occurs within the energy storage valve in other manners based on the electrical parameters detected by the electrical parameter detection circuits.

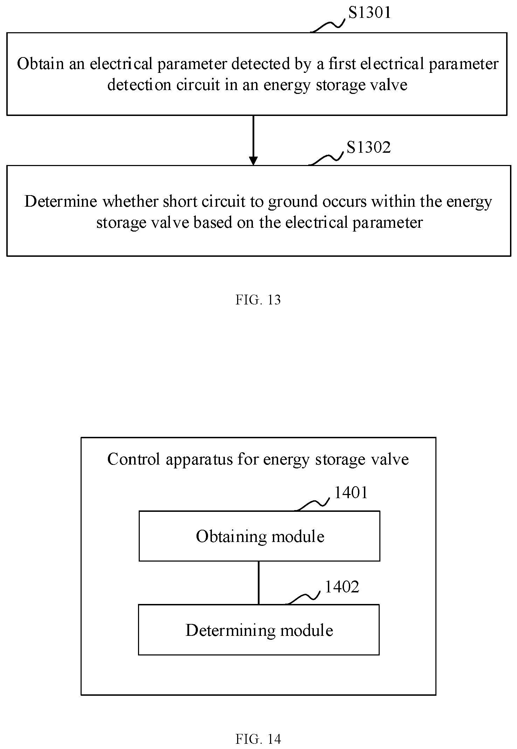

In some embodiments, FIG. 13 is a schematic flowchart of a control method for energy storage valve according to some embodiments of this application. The energy storage valve in the embodiments of this application may be the energy storage valve in any one of the foregoing embodiments. In the embodiments of this application, the method being applied to the control device in the foregoing energy storage valve is used as an example for description. As shown in FIG. 13, the method in the embodiments of this application may include the following steps.

Step S1301: Obtain an electrical parameter detected by a first electrical parameter detection circuit in the energy storage valve.

Step S1302: Determine whether short circuit to ground occurs within the energy storage valve based on the electrical parameter.

In some embodiments, the determining whether short circuit to ground occurs within the energy storage valve based on the electrical parameter in step S1302 may include:
if the electrical parameter is greater than or equal to a preset current threshold, determining that short circuit to ground occurs within the energy storage valve.

In some embodiments, the determining whether short circuit to ground occurs within the energy storage valve based on the electrical parameter in step S1302 may include:
determining a current change rate based on the electrical parameter; and
if the current change rate is greater than or equal to a preset change rate threshold, determining that short circuit to ground occurs within the energy storage valve.

In some embodiments, the energy storage valve further includes a second electrical parameter detection circuit connected to the main circuit of the energy storage valve, where the other end of the second electrical parameter detection circuit is connected to a busbar; and the determining whether short circuit to ground occurs within the energy storage valve based on the electrical parameter in step S1302 may include:
determining an electrical parameter difference between an electrical parameter detected by the second electrical parameter detection circuit and the electrical parameter detected by the first electrical parameter detection circuit; and
if the electrical parameter difference is greater than or equal to a preset electrical parameter difference threshold, determining that short circuit to ground occurs within the energy storage valve.

In some embodiments, the method in the embodiments of this application may further include:
if it is determined that short circuit to ground occurs within the energy storage valve, controlling the energy storage valve to switch to a blocked state.

For the specific implementation of the control method for energy storage valve provided in the embodiments of this application, reference may be made to the relevant content in the foregoing energy storage valve embodiments of this application, with a similar implementation principle and similar technical effects. Details are not repeated herein.

It should be understood that although the steps of the flowchart in the foregoing embodiments are shown sequentially as indicated by the arrows, these steps are not necessarily performed sequentially in the order indicated by the arrows. Unless otherwise specified explicitly, execution of these steps is not limited to a strict order, and the steps may be executed in another order. Moreover, at least some of the steps of the flowchart in the foregoing embodiments may include multiple steps or multiple stages. These steps or stages are not necessarily performed at a same time but may be performed at different times, and these steps or stages are not necessarily performed in a sequential order either but may be performed in a sequential or alternating manner with at least some of other steps or steps or stages in other steps.

Based on the same inventive concept, the embodiments of this application further provide a control apparatus for energy storage valve for implementing the foregoing control method for energy storage valve. The problem-solving implementation scheme provided by the apparatus is similar to the implementation scheme recorded in the foregoing method. Therefore, for specific limitations in one or more embodiments of the control apparatus for energy storage valve provided below, reference may be made to the limitations on the relevant content in the foregoing energy storage valve embodiments. Details are not repeated herein.

In some embodiments, FIG. 14 is a schematic structural diagram of a control apparatus for energy storage valve according to some embodiments of this application. The energy storage valve in the embodiments of this application may be the energy storage valve in any one of the foregoing embodiments. The control apparatus for energy storage valve provided in the embodiments of this application can be applied to the control device of the energy storage valve. As shown in FIG. 14, the control apparatus for energy storage valve in the embodiments of this application may include an obtaining module 1401 and a determining module 1402;
where the obtaining module 1401 is configured to obtain an electrical parameter detected by a first electrical parameter detection circuit in the energy storage valve; and
the determining module 1402 is configured to determine whether short circuit to ground occurs within the energy storage valve based on the electrical parameter.

In some embodiments, the determining module 1402 is specifically configured to:
if the electrical parameter is greater than or equal to a preset current threshold, determine that short circuit to ground occurs within the energy storage valve.

In some embodiments, the determining module 1402 is specifically configured to:
determine a current change rate based on the electrical parameter; and
if the current change rate is greater than or equal to a preset change rate threshold, determine that short circuit to ground occurs within the energy storage valve.

In some embodiments, the energy storage valve further includes a second electrical parameter detection circuit connected to a main circuit of the energy storage valve, where the other end of the second electrical parameter detection circuit is connected to a busbar; and the determining module 1402 is specifically configured to:
determine an electrical parameter difference between an electrical parameter detected by the second electrical parameter detection circuit and the electrical parameter detected by the first electrical parameter detection circuit; and
if the electrical parameter difference is greater than or equal to a preset electrical parameter difference threshold, determine that short circuit to ground occurs within the energy storage valve.

In some embodiments, the control apparatus for energy storage valve in the embodiments of this application may further include:
a control module configured to, if it is determined that short circuit to ground occurs within the energy storage valve, control the energy storage valve to switch to a blocked state.

The control apparatus for energy storage valve provided in the embodiments of this application can be used to perform the technical solutions in the foregoing embodiments of the control method for energy storage valve of this application, with a similar implementation principle and similar technical effects. Details are not repeated herein.

All or some of the modules in the foregoing image processing apparatus may be implemented by software, hardware, or a combination thereof. Each of the foregoing modules may be embedded as hardware into or independent of a processor in a control device, or may be stored as software in a memory in a control device for ease of being called by a processor to perform the foregoing operations corresponding to each module.

In some embodiments, a control device is further provided, including a memory and a processor, where the memory stores a computer program, and when the processor executes the computer program, the technical solutions in the foregoing embodiments of the control method for energy storage valve of this application are implemented, with a similar implementation principle and similar technical effects. Details are not repeated herein.

In some embodiments, an energy storage apparatus is further provided. The energy storage apparatus may include the energy storage valve according to the foregoing embodiments, with a similar implementation principle and similar technical effects. Details are not repeated herein.

Persons of ordinary skill in the art can understand that all or part of the processes of the method in the embodiments may be implemented by a computer program instructing related hardware. The computer program may be stored in a non-volatile computer-readable storage medium, and when the computer program is executed, the processes in the foregoing method embodiments can be included. Any reference to a memory or another medium used in the embodiments of this application may include at least one of non-volatile and volatile memories. The non-volatile memory may include a read-only memory (Read-Only Memory, ROM), a magnetic tape, a floppy disk, a flash memory, an optical memory, a high-density embedded non-volatile memory, a resistive random access memory (ReRAM), a magnetoresistive random access memory (Magnetoresistive Random Access Memory, MRAM), a ferroelectric random access memory (Ferroelectric Random Access Memory, FRAM), a phase change memory (Phase Change Memory, PCM), a graphene memory, and the like. The volatile memory may include a random access memory (Random Access Memory, RAM), an external cache memory, or the like. As an illustration but not a limitation, the RAM can take various forms, such as static random access memory (Static Random Access Memory, SRAM) or dynamic random access memory (Dynamic Random Access Memory, DRAM). The processor used in the embodiments of this application may be a general-purpose processor, a central processing unit, a graphics processing unit, a digital signal processor, a programmable logic device, a quantum computing-based data processing logic unit, or the like, which is not limited thereto.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions in the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An energy storage valve, wherein the energy storage valve comprises at least two energy storage modules configured to be connected in series in a main circuit of the energy storage valve, a current-limiting circuit, and an electrical parameter detection circuit configured to detect electrical parameters in a circuit;
wherein the current-limiting circuit and the electrical parameter detection circuit are both connected to a grounding point on the main circuit of the energy storage valve, the grounding point is connected to ground, and the electrical parameter detection circuit is disposed between the grounding point and the ground.

2. The energy storage valve according to claim 1, wherein a first portion of energy storage modules among the at least two energy storage modules is located on one side of the grounding point, and a second portion of energy storage modules among the at least two energy storage modules is located on the other side of the grounding point.

3. The energy storage valve according to claim 2, wherein a number difference between the first portion of energy storage modules and the second portion of energy storage modules is less than a preset number.

4. The energy storage valve according to claim 2 or 3, wherein the current-limiting circuit comprises a first current-limiting unit disposed between the first portion of energy storage modules and the second portion of energy storage modules, and/or a second current-limiting unit disposed between the grounding point and the ground.

5. The energy storage valve according to claim 4, wherein the first current-limiting unit comprises a first reactor and a second reactor;
wherein the first reactor is disposed between the first portion of energy storage modules and the grounding point; and
the second reactor is disposed between the second portion of energy storage modules and the grounding point.

6. The energy storage valve according to claim 4 or 5, wherein the second current-limiting unit comprises a third reactor and/or a first resistor.

7. The energy storage valve according to claim 1, wherein the at least two energy storage modules are all located on one side of the grounding point.

8. The energy storage valve according to claim 7, wherein the current-limiting circuit comprises a third current-limiting unit disposed between the grounding point and the ground.

9. The energy storage valve according to claim 8, wherein the third current-limiting unit comprises a fourth reactor.

10. The energy storage valve according to any one of claims 1 to 9, wherein the energy storage valve further comprises a control device connected to the at least two energy storage modules and the electrical parameter detection circuit;
wherein the control device is configured to determine whether short circuit to ground occurs within the energy storage valve based on an electrical parameter detected by the electrical parameter detection circuit.

11. A control method for energy storage valve, wherein the energy storage valve is the energy storage valve according to any one of claims 1 to 10, and the method comprises:
obtaining an electrical parameter detected by a first electrical parameter detection circuit in the energy storage valve; and
determining whether short circuit to ground occurs within the energy storage valve based on the electrical parameter.

12. The method according to claim 11, wherein the determining whether short circuit to ground occurs within the energy storage valve based on the electrical parameter comprises:
if the electrical parameter is greater than or equal to a preset current threshold, determining that short circuit to ground occurs within the energy storage valve.

13. The method according to claim 11, wherein the determining whether short circuit to ground occurs within the energy storage valve based on the electrical parameter comprises:
determining a current change rate based on the electrical parameter; and
if the current change rate is greater than or equal to a preset change rate threshold, determining that short circuit to ground occurs within the energy storage valve.

14. The method according to claim 11, wherein the energy storage valve further comprises a second electrical parameter detection circuit connected to the main circuit of the energy storage valve, wherein the other end of the second electrical parameter detection circuit is connected to a busbar; and the determining whether short circuit to ground occurs within the energy storage valve based on the electrical parameter comprises:
determining an electrical parameter difference between an electrical parameter detected by the second electrical parameter detection circuit and the electrical parameter detected by the first electrical parameter detection circuit; and
if the electrical parameter difference is greater than or equal to a preset electrical parameter difference threshold, determining that short circuit to ground occurs within the energy storage valve.

15. The method according to any one of claims 11 to 14, wherein the method further comprises:
if it is determined that short circuit to ground occurs within the energy storage valve, controlling the energy storage valve to switch to a blocked state.

16. A control apparatus for energy storage valve, wherein the energy storage valve is the energy storage valve according to any one of claims 1 to 11, and the apparatus comprises:
an obtaining module configured to obtain an electrical parameter detected by a first electrical parameter detection circuit in the energy storage valve; and
a determining module configured to determine whether short circuit to ground occurs within the energy storage valve based on the electrical parameter.

17. An energy storage apparatus, wherein the energy storage apparatus comprises the energy storage valve according to any one of claims 1 to 11.
